# EUROPÄISCHE PATENTANMELDUNG

(11) **EP 4 230 038 A1**
(43) Veröffentlichungstag der Anmeldung: **23.08.2023**
(21) Anmeldenummer: 23157446.8
(22) Anmeldetag: 20.02.2023
(51) Int. Cl.: A01M 7/00, A01M 9/00

(54) **LANDWIRTSCHAFTLICHE VERTEILMASCHINE UND VERFAHREN ZUM POSITIONSGENAUEN VERTEILEN VON LANDWIRTSCHAFTLICHEM WIRKMITTEL**

(30) Priorität: 22.02.2022 DE 102022104063
(71) Anmelder: HORSCH LEEB Application Systems GmbH, 94405 Landau an der Isar (DE)
(72) Erfinder: Leeb, Theodor, 94405 Landau an der Isar (DE)
(74) Vertreter: v. Bezold & Partner Patentanwälte - PartG mbB

(57) **Zusammenfassung**

Die Erfindung betrifft eine landwirtschaftliche Verteilmaschine (10) zum positionsgenauen Verteilen von landwirtschaftlichem Wirkmittel auf einer landwirtschaftlichen Fläche (50), mit mehreren beabstandet zueinander an einem Verteilgestänge (14) angeordneten, zum Verteilen des landwirtschaftlichen Wirkmittel eingerichteten Verteilelementen (20a - 20i), einer Bestimmungseinrichtung, welche dazu eingerichtet ist, Positionen von mit Wirkmittel zu behandelnden Pflanzen auf der landwirtschaftlichen Fläche (50) zu definieren, einer Steuereinrichtung, welche zur Steuerung der Verteilelemente (20a - 20i) und zur Auswertung von mittels der Bestimmungseinrichtung definierten Positionen von mit Wirkmittel zu behandelnden Pflanzen eingerichtet ist. Zur positionsgenauen Verteilung von Wirkmittel sieht die Erfindung vor, dass die Steuereinrichtung zudem dazu eingerichtet ist, die Verteilelemente (20a - 20i) einzeln oder gruppenweise zumindest basierend auf der jeweiligen definierten Position der Pflanzen und einer die Positionen der Pflanzen umgebenden, in dessen Größe veränderbaren Zielflächengröße (100) zu steuern.

Die Erfindung betrifft zudem ein Verfahren zum positionsgenauen Verteilen von landwirtschaftlichem Wirkmittel auf einer landwirtschaftlichen Fläche (50)

## Beschreibung

Die Erfindung betrifft eine landwirtschaftliche Verteilmaschine zum positionsgenauen Verteilen von landwirtschaftlichem Wirkmittel auf einer landwirtschaftlichen Fläche. Die Erfindung betrifft zudem ein Verfahren zum positionsgenauen Verteilen von landwirtschaftlichem Wirkmittel auf einer landwirtschaftlichen Fläche.

In der Landwirtschaft werden zur gleichmäßigen Verteilung von landwirtschaftlichen Verteilgütern, wie bspw. Spritzflüssigkeit landwirtschaftliche Verteilmaschinen wie bspw. Feldspritzen eingesetzt. Derartige Feldspritzen weisen zur Erreichung einer großen Schlagkraft, ein sich in großer Breite quer zur Fahrtrichtung erstreckendes Verteilgestänge auf. Zur Verteilung der Spritzflüssigkeit sind am Verteilgestänge jeweils mit einem Vorratsbehälter verbundene Verteilelemente wie bspw. Spritzdüsen angebracht.

Um die benötigte Menge an Wirkmittel, d.h. um die benötigte Menge an Spritzflüssigkeit so weit wie möglich zu reduzieren und zudem jeweils nur derartige Pflanzen mit Spritzflüssigkeit zu besprühen für welche die Spritzflüssigkeit vorgesehen ist, werden zunehmend sog. Spot Spraying Systeme eingesetzt. Bei derartigen Spot Spraying Systemen wird in der Regel zunächst eine landwirtschaftliche Fläche in eine Vielzahl von Unterbereichen unterteilt, bspw. in 100.000 oder mehr Unterbereiche. Wobei hierbei gilt, je mehr Unterbereiche desto genauer kann die Verteilung der Spritzflüssigkeit erfolgen. Wobei die Anzahl an Unterbereichen in der Regel durch jeweilige Rechner vorgegeben ist und somit bspw. auch bei großen landwirtschaftlichen Flächen eine ausreichend kleine Unterteilung der Unterbereiche nicht möglich ist, da eine Unterteilung in Unterbereiche entsprechend leistungsstarke Rechner mit einer großen Speicherkapazität erfordert.

Neben einer Unterteilung von Unterbereichen erfolgt zudem bei Spot Spraying Systemen eine Erfassung von Positionen eines Schadbewuchses und eine Zuordnung dieser Positionen zu einem oder mehreren Unterbereichen. Anschließend erfolgt eine Verteilung von Spritzflüssigkeit bezogen auf die jeweiligen Unterbereiche denen eine Position von Pflanzen zugeordnet wurde unabhängig davon, wieviel Fläche eines Unterbereichs die zu behandelnde Pflanze tatsächlich bedeckt und somit nicht exakt in Bezug auf eine tatsächliche Position der zu behandelnden Pflanzen, wodurch es vorkommen kann, dass die Unterbereiche ein vielfaches der Größe der zu behandelnden Pflanze aufweisen, wodurch wiederum zu große Unterbereiche, respektive Zielflächen besprüht werden. Des Weiteren kann es vorkommen, dass bei bspw. an zwei, drei oder mehr Unterbereichen angrenzenden Pflanzen entsprechend zwei, drei oder mehr Unterbereiche besprüht werden, obwohl die Pflanze nur einen kleinen Teil eines Unterbereichs bedeckt.

Die aus dem Stand der Technik bekannten Verteilmaschinen weisen, u.a. durch die großen Rechenleistungen welche für die Unterteilung und die Zuordnung von Pflanzen zu Unterbereichen benötigt werden eine hohe Systemreaktionszeit auf, d.h. zwischen einer Erfassung von Pflanzen, der Aktivierung der jeweiligen Spritzdüsen und dem tatsächlichen Auftreffen der Spritzflüssigkeit auf den Pflanzen liegt eine Reaktionszeit vor, wodurch es insbesondere bei sich verändernden Bedingungen wie bspw. bei verändernden Fahrgeschwindigkeiten oftmals vorkommt, dass die zu behandelnden Pflanzen nicht in gewünschter Weise mit der Spritzflüssigkeit besprüht werden.

Die der Erfindung zugrunde liegende Aufgabe besteht somit darin, ein positionsgenaues Verteilen von landwirtschaftlichen Wirkmittel auf zu behandelnde Pflanzen in ökonomischer und ressourcensparender Weise auch bei sich verändernden Bedingungen zu verbessern.

Diese Aufgaben werden gelöst durch eine landwirtschaftliche Verteilmaschine mit den Merkmalen des unabhängigen Anspruch 1, sowie durch ein Verfahren zum positionsgenauen Verteilen von landwirtschaftlichem Wirkmittel auf einer landwirtschaftlichen Fläche mit den Merkmalen des Verfahrensanspruch 15. Vorteilhafte Ausführungsformen und Weiterbildungen der Erfindung sind in den Ansprüchen und der folgenden Beschreibung unter teilweiser Bezugnahme auf die Figuren offenbart.

Gemäß einem ersten Aspekt der Erfindung wird eine landwirtschaftliche Verteilmaschine (z.B. Feldspritze oder pneumatischer Düngerstreuer) zum positionsgenauen Verteilen von landwirtschaftlichem Wirkmittel (z.B. Spritzflüssigkeit, granularer Dünger und/oder dergl.) auf einer landwirtschaftlichen Fläche (z.B. Ackerfläche) bereitgestellt.

Die Verteilmaschine umfasst mehrere beabstandet zueinander an einem Verteilgestänge angeordnete, zum Verteilen des landwirtschaftlichen Wirkmittel eingerichtete Verteilelemente. Zudem umfasst die Verteilmaschine eine Bestimmungseinrichtung, welche dazu eingerichtet ist, Positionen von mit Wirkmittel zu behandelnden Pflanzen auf der landwirtschaftlichen Fläche zu definieren.

Die Verteilmaschine umfasst zudem eine Steuereinrichtung, welche zur Steuerung der Verteilelemente und zur Auswertung (z.B. Bestimmung und/oder Vorgabe von Positionen von Pflanzen) von mittels der Bestimmungseinrichtung definierten Positionen von mit Wirkmittel zu behandelnden Pflanzen eingerichtet ist.

Um ein positionsgenaues Verteilen von landwirtschaftlichen Wirkmittel auf zu behandelnde Pflanzen in ökonomischer und ressourcensparender Weise auch bei sich verändernden Bedingungen zu verbessern ist erfindungsgemäß vorgesehen, dass die Steuereinrichtung zudem dazu eingerichtet ist, die Verteilelemente einzeln oder gruppenweise zumindest basierend auf der jeweiligen definierten Position der Pflanzen und einer die Positionen der Pflanzen umgebenden, vorzugsweise in dessen Größe veränderbaren, Zielflächengröße zu steuern.

Infolge der erfindungsgemäßen, die Positionen der Pflanzen umgebenden und vorzugsweise in dessen Größe veränderbaren, Zielflächengröße ist keine Unterteilung der landwirtschaftlichen Fläche in Unterbereiche mehr erforderlich, wodurch zum einen auch leistungsschwächere Rechner zum Einsatz kommen können und wodurch zum anderen auch auf sich verändernde Bedingungen wie bspw. sich verändernde Fahrgeschwindigkeiten durch ein Verändern der Zielflächengröße reagiert werden kann. Erfindungsgemäß kann somit auch die Systemreaktionszeit wesentlich verringert werden.

Die erfindungsgemäße Verteilmaschine kann bspw. eine Feldspritze sein die insbesondere zur Verteilung von flüssigem Wirkmittel (z.B. Spritzflüssigkeit) eingerichtet ist. Wobei die Verteilelemente jeweils als Spritzdüsen ausgeführt sein können.

Die erfindungsgemäße Verteilmaschine kann alternativ oder ergänzend ein pneumatischer Düngerstreuer sein, der insbesondere zur Verteilung von granularem Wirkmittel (z.B. Dünger) eingerichtet ist. Wobei die Verteilelemente jeweils als Prallelemente oder Leitelemente ausgeführt sein können.

Die Wirkmittel können in fester, beispielsweise granularer, oder flüssiger Form vorliegen und wenigstens einen Wirkstoff enthalten.

Es sei darauf hingewiesen, dass im vorliegenden unter die Definition Fahrgeschwindigkeit jegliche Geschwindigkeiten, Beschleunigungen und/oder dergl. subsumierbar sind, bspw. auch unterschiedliche Bewegungsgeschwindigkeiten des Verteilgestänge bspw. bei einer Kurvenfahrten.

Im Kontext der Erfindung kann eine gruppenweise Steuerung von Verteilelementen auch die Ansteuerung einer Teilbreite umfassen. Auch kann eine gruppenweise Steuerung von Verteilelementen auch eine gruppenweise Steuerung von zumindest zwei oder mehr, beliebigen Verteilelementen umfassen.

Die Zielflächengröße kann in deren Größe beliebig veränderbar sein.

Die Zielflächengröße kann alternativ oder ergänzend innerhalb eines definierten und/oder definierbaren Raster veränderbar sein.

Eine bevorzugte Ausführungsvariante der Erfindung kann vorsehen, dass die Steuereinrichtung dazu eingerichtet ist, die Lage der mehreren am Verteilgestänge angeordneten Verteilelemente quer zur Fahrtrichtung der Verteilmaschine zu definieren und eine Lage der Position von mit Wirkmittel zu behandelnden Pflanzen gegenüber den mehreren am Verteilgestänge angeordneten Verteilelementen zu definieren. Hierzu kann vorgesehen sein, dass bspw. ein Abstand der Position der Pflanzen quer zur Fahrtrichtung zu einem oder mehreren Verteilelementen berechnet wird.

In einer bevorzugten Ausführungsvariante der Erfindung kann vorgesehen sein, dass die Steuereinrichtung dazu eingerichtet ist, die Verteilelemente der mehreren am Verteilgestänge angeordneten Verteilelemente einzeln oder gruppenweise zu steuern, deren Lage am Verteilgestänge quer zur Fahrtrichtung der Verteilmaschine gegenüber der Position der zu behandelnden Pflanze am nächsten ist und mittels derer der Querschnitt der Zielflächengröße möglichst exakt abgedeckt werden kann. Somit ist es zweckmäßig möglich, dass quer zur Fahrtrichtung jeweils nur eine minimale Anzahl, entsprechend dem Querschnitt der Zielflächengröße quer zur Fahrtrichtung, von Verteilelementen aktiviert werden, wodurch eine mit Wirkmittel behandelte Fläche auf ein Minimum reduziert werden kann, die Fläche jedoch dennoch noch für eine entsprechende Pflanzengröße ausreichend ist.

Die Zielflächengröße kann verschiedensten Flächenformen einnehmen, bspw. Kreisförmige, Ovale, Quadratische, Rechteckige, Vieleckige und/oder dergl. Flächenformen. Die Zielflächengröße kann bspw. durch ein Verändern eines Querschnittes (z.B. eines Radius und/oder einer Breite und/oder einer Flächengröße) veränderbar sein.

Insbesondere ist es möglich, dass die Zielflächengröße eine Position der Pflanze im Wesentlichen gleichmäßig umgibt (z.B. Kreisförmig, Quadratisch) und/oder eine der Pflanze vorgelagerte und eine der Pflanze nachgelagerte, die Zielflächengröße definierende, Erstreckung eines Querschnittes in Fahrtrichtung ungleichmäßig sind (z.B. wenn die Zielflächengröße Oval, Rechteckig und/oder dergl. ist) und/oder eine links gegenüber der Pflanze und eine rechts gegenüber der Pflanze sich befindende, die Zielflächengröße definierende, Erstreckung des Querschnittes quer zur Fahrtrichtung ungleichmäßig (z.B. wenn die Zielflächengröße Oval, Rechteckig und/oder dergl. ist) sind.

Es ist auch möglich, dass aufgrund der jeweiligen mittels der Verteilelementen erzeugten Streufächer, Spritzfächer oder dergl. die jeweiligen Formen der Zielflächengrößen nicht exakt mit dem jeweiligen Wirkmittel abgedeckt werden können.

Insbesondere ist es auch möglich, dass die jeweiligen Flächenformen der Zielflächengröße an mittels der jeweiligen Verteilelementen erzeugte Streufächer, Spritzfächer oder dergl. angepasst sind.

Um eine landwirtschaftliche Verteilmaschine zu schaffen welche bei verschiedensten Pflanzensorten und deren dazugehörigen Pflanzengrößen eingesetzt werden kann ist es möglich, dass das Verteilgestänge in dessen Höhenabstand gegenüber den Pflanzen verstellbar ist. Um hierbei dennoch eine ökonomische und ressourcensparende Verteilung der Wirkmittel zu erreichen ist es möglich, dass die Steuereinrichtung dazu eingerichtet ist, die Verteilelemente einzeln oder gruppenweise basierend auf dem Querschnitt der Zielflächengröße quer zur Fahrtrichtung, einem Höhenabstand der Verteilelemente gegenüber den zu behandelnden Pflanzen und/oder basierend auf einer mittels der Verteilelemente erreichbaren Breite an landwirtschaftlichem Wirkmittel quer zur Fahrtrichtung der Verteilmaschine zu steuern. Ist bspw. ein Verteilelement dazu eingerichtet das jeweilige Wirkmittel kegelförmig auf den Pflanzen zu verteilen, kann mittels einem Verteilelement eine größere Breite der Zielflächengröße abgedeckt werden, desto größer der Höhenabstand ist, dementsprechend kann mit einem Verteilelement eine größere Breite abgedeckt werden, wodurch zur Erreichung der Zielflächenbreite ggf. weniger Verteilelemente aktiviert werden müssen. Der Höhenabstand kann hierzu bspw. Sensorisch erfasst werden und mittels der Steuereinrichtung entsprechend verarbeitet werden.

Die Steuereinrichtung kann gemäß einer Weiterbildung der Erfindung zudem dazu eingerichtet sein, eine ausgebrachte Menge an Wirkmittel der Verteilelemente einzeln oder gruppenweise basierend auf der jeweiligen mittels der von einzelnen oder gruppenweisen Verteilelemente abgedeckten Breite der Zielflächengröße zu erhöhen oder zu verringern. Somit ist vorgesehen, je größer bspw. eine mittels einem Verteilelemente abgedeckte Breite des Querschnittes der Zielflächengröße desto größer bspw. die ausgebrachte Menge an Wirkmittel.

In Abhängigkeit einer Zielflächengröße einer Fahrgeschwindigkeit und/oder einer Systemreaktionszeit kann zudem eine Verteilung der Wirkmittel in Fahrtrichtung der Verteilmaschine beeinflusst werden, um hierbei dennoch die Wirkmittel in gewünschter Weise auf die Pflanzen zu verteilen ist es alternativ oder ergänzend möglich, dass die Steuereinrichtung dazu eingerichtet ist, Einschaltpositionen und Ausschaltpositionen der Verteilelemente einzeln oder gruppenweise basierend auf der Zielflächengröße, einer Fahrgeschwindigkeit und/oder einer Systemreaktionszeit zu verändern. Wobei dies zudem noch unter Berücksichtigung der jeweiligen Lage der Verteilelemente in Fahrtrichtung gegenüber den zu behandelnden Pflanzen erfolgen kann.

Eine Weiterbildung der Erfindung kann vorsehen, dass die Steuereinrichtung dazu eingerichtet ist, die Verteilelemente einzeln oder gruppenweise basierend auf einem definierbaren Überlappungsgrad und/oder einer definierbaren Überlappungstoleranz zu steuern. Wobei der Überlappungsgrad und/oder die Überlappungstoleranz jeweils manuell durch eine Bedienperson veränderbar sind und bspw. in einer Prozentangabe von bspw. 10%; 20%; 50% oder 100% erfolgen können und von der Steuereinrichtung entsprechend zu Steuersignalen für Verteilelemente verarbeitet werden können.

Gemäß einer Ausführungsvariante der Erfindung ist es möglich, dass die Größe, insbesondere eine Größe eines Querschnittes, der Zielflächengröße manuell veränderbar ist. Somit kann durch eine Bedienperson definiert werden in welcher Größe (z.B. umgebenden Zielflächengröße) die Pflanze mit Wirkmittel behandelt werden soll.

Alternativ oder ergänzend ist es möglich, dass die Größe, insbesondere eine Größe eines Querschnittes, der Zielflächengröße automatisiert, insbesondere anhand einer Rückkoppelung einer Bewegungsinformation der Verteilmaschine, mittels der Steuereinrichtung veränderbar ist. Somit kann auf Bewegungen der Verteilmaschine dahingehend reagiert werden, dass je größer bspw. die Bewegungen desto ungenauer die Möglichkeit die jeweilige Pflanze exakt mit Wirkmittel zu treffen, dementsprechend kann durch eine automatisierte Anpassung der Zielflächengröße anhand von Bewegungsinformationen immer sichergestellt werden, dass die Pflanzen ausreichend mit Wirkmittel behandelt werden.

Alternativ oder ergänzend ist es möglich, dass die Größe, insbesondere eine Größe eines Querschnittes, der Zielflächengröße automatisiert, insbesondere anhand einer Vegetationsphase (einem Unkrautdruck, einem Behandlungszeitpunkt, einer Vegetationsphase, einer Art der Behandlung und/oder einer Sicherheit für ein weiteres Ausbreiten des Unkrautes zu verhindern) von mit Wirkmittel zu behandelnden Pflanzen auf der landwirtschaftlichen Fläche, mittels der Steuereinrichtung veränderbar ist.

In einer Weiterbildung der Erfindung kann vorgesehen sein, dass die Bewegungsinformationen definiert sind durch eine Fahrgeschwindigkeit der Verteilmaschine, wobei die Größe, insbesondere eine Größe eines Querschnittes, der Zielflächengröße je größer ist, desto größer die Fahrgeschwindigkeit ist. Auch kann vorgesehen sein, dass die Bewegungsinformationen definiert sind durch, insbesondere sensorisch erfasste, Schwingungen des Verteilgestänge in Fahrtrichtung, wobei die Größe, insbesondere eine Größe des Querschnittes, der Zielflächengröße je größer ist, desto größer die Amplitude der Schwingung ist und/oder je weiter entfernt das jeweilige Verteilelement von einer Mittelachse der Verteilmaschine liegt. Somit kann erfindungsgemäß durch ein Verändern der Zielflächengröße jederzeit auf sich verändernde Bedingungen reagiert werden und jeweils sichergestellt werden, dass die Pflanzen ausreichend mit Wirkmittel behandelt werden.

Es kann zudem vorgesehen sein, dass die Zielflächengröße eine Fahrgeschwindigkeitsabhängige Mindestgröße aufweist, wobei hierbei vorgesehen sein kann, dass mittels der Steuereinrichtung in Abhängigkeit einer Fahrgeschwindigkeit der Verteilmaschine eine Zielflächengröße automatisiert angepasst wird. Wobei auch hierbei wiederum vorgesehen sein kann, dass bspw. die Zielflächengröße durch eine Bedienperson unabhängig hierzu verändert, d.h. übersteuert (z. B. vergrößert oder verkleinert) werden kann.

Eine bevorzugte Weiterbildung der Erfindung kann zudem vorsehen, dass die Steuereinrichtung dazu eingerichtet ist, in Abhängigkeit der Fahrgeschwindigkeit und/oder in Abhängigkeit der Schwingungen eine Mindestgröße der Zielflächengröße zu definieren, insbesondere unter Berücksichtigung eines veränderbaren Toleranzbereichs (bspw. 20%) der Zielflächengröße zu definieren. Somit kann bspw. zu einer Fahrgeschwindigkeit von bspw. 10km/h eine Mindestgröße bspw. des Querschnitts der Zielflächengröße von bspw. 50cm definiert sein, wobei hierzu auch wiederum ein Toleranzbereich dazu berechnet werden kann von bspw. +/- 20%. Dieser Toleranzbereich hat bspw. den Vorteil, dass wenn bspw. für die Erreichung von 50cm drei Verteilelemente benötigt, werden würden, für bspw. 40cm jedoch nur zwei Verteilelemente, somit auch eine Ansteuerung von nur zwei Verteilelementen ausreichend wäre, wodurch wiederum die mit Wirkmittel behandelte Fläche weiter reduziert werden kann.

Die Bestimmungseinrichtung kann zweckmäßig dazu eingerichtet sein, Positionen von mit Wirkmittel zu behandelnden Pflanzen in einem Offline-Verfahren zu definieren und/oder in einem Online-Verfahren zu definieren.

Eine Definition von Positionen von zu behandelnden Pflanzen mittels der Bestimmungseinrichtung kann insbesondere eine jeweilige Definition einer Punktkoordinate auf einer landwirtschaftlichen Fläche umfassen, wobei wiederum die Zielflächengröße diese Punktkoordinate, bspw. im Wesentlichen gleichförmig und bspw. kreisförmig, umgeben kann. Die Punktkoordinate kann zudem bspw. ein Pflanzenzentrum definieren.

Bei den mit Wirkmittel zu behandelnden Pflanzen kann es sich in Abhängigkeit des jeweiligen Wirkstoffes des Wirkmittel bspw. um Kulturpflanzen wie bspw. Getreide handeln oder um Schadbewuchs, d.h. um Unkraut handeln. Wobei eine Auswahl jeweils durch eine Bedienperson erfolgen kann und/oder anhand einer Eingabe des Wirkmittel automatisiert mittels der Steuereinrichtung erfolgen kann.

Gemäß einem weiteren Aspekt der Erfindung wird zudem ein Verfahren zum positionsgenauen Verteilen von landwirtschaftlichem Wirkmittel auf einer landwirtschaftlichen Fläche bereitgestellt. Das Verfahren umfasst ein Bereitstellen einer landwirtschaftlichen Verteilmaschine mit einem Verteilgestänge und mehreren beabstandet zueinander am Verteilgestänge angeordneten Verteilelementen, welche zum Verteilen von Wirkmittel eingerichtet sind. Zudem umfasst das Verfahren eine Definition von Positionen von mit Wirkmittel zu behandelnden Pflanzen auf der landwirtschaftlichen Fläche, vorzugsweise mittels einer Bestimmungseinrichtung. Darüber hinaus umfasst das Verfahren eine Auswertung von definierten Positionen von mit Wirkmittel zu behandelnden Pflanzen mittels einer Steuereinrichtung.

Das Erfindungsgemäße Verfahren ist gekennzeichnet durch ein Steuern einzelner oder gruppenweiser Verteilelemente basierend auf der jeweiligen definierten Position der Pflanzen und einer die Position der Pflanzen umgebenden, vorzugsweise in dessen Größe veränderbaren Zielflächengröße mittels der Steuereinrichtung.

Gemäß einer Weiterbildung des Verfahrens ist insbesondere vorgesehen, dass dieses mit einer landwirtschaftlichen Verteilmaschine wie in diesem Dokument beschrieben ausgeführt wird, insbesondere mit einer landwirtschaftlichen Verteilmaschine nach zumindest einem der Patentansprüche ausgeführt wird.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können. Auch kann die Bestimmungseinrichtung Bestandteil der Steuereinrichtung sein, d.h. die Steuereinrichtung kann auch die Bestimmungseinrichtung umfassen.

Es sei noch darauf hingewiesen, dass die Begriffe "Steuern" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein.

Zur Vermeidung von Wiederholungen sei darauf hingewiesen, dass die erfindungsgemäßen Ausführungsformen und Merkmale in beliebiger Weise und Frei mit der landwirtschaftlichen Verteilmaschine und/oder dem Verfahren kombinierbar sind. Dementsprechend sind alle Ausführungsformen und erfindungsgemäßen Merkmale sowohl für die landwirtschaftliche Verteilmaschine als auch für das Verfahren offenbart und beanspruchbar.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: ein Ausführungsbeispiel einer erfindungsgemäßen landwirtschaftlichen Verteilmaschine während einer Verteilung von landwirtschaftlichem Wirkmittel auf einer landwirtschaftlichen Fläche,
- Figur 2A & 2B: je ein Ausführungsbeispiel einer definierten Position einer mit Wirkmittel zu behandelnder Pflanze mit einer diese im Wesentlichen gleichmäßig umgebenden Zielflächengröße und dazugehörigen einzeln oder gruppenweise gesteuerten Verteilelemente.

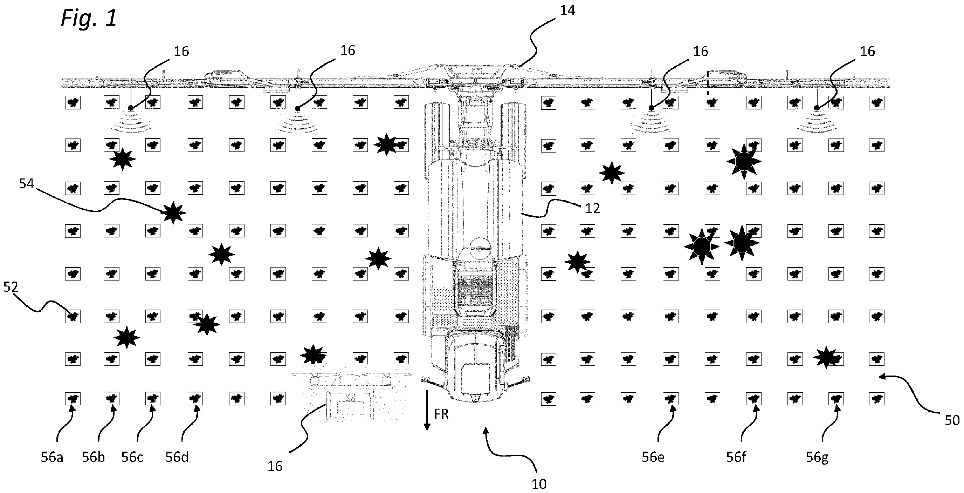

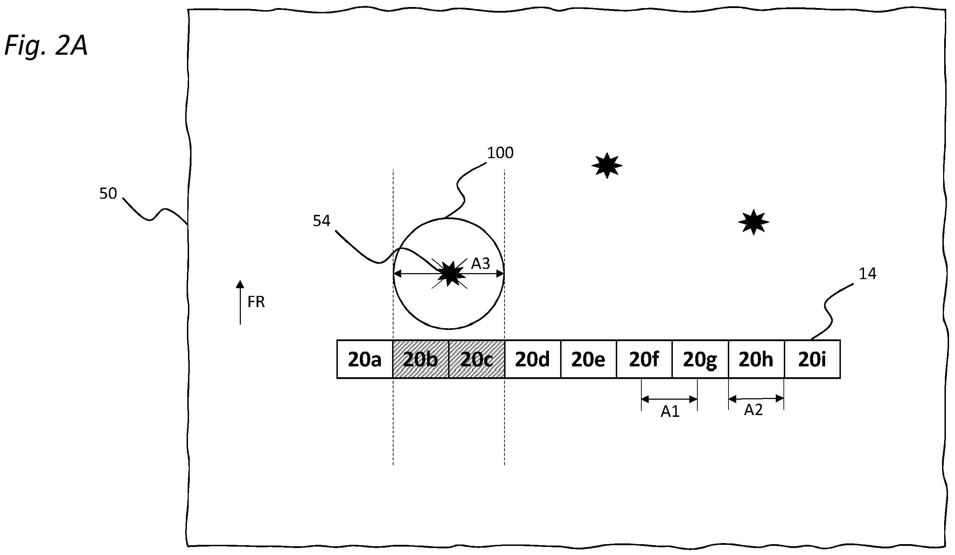

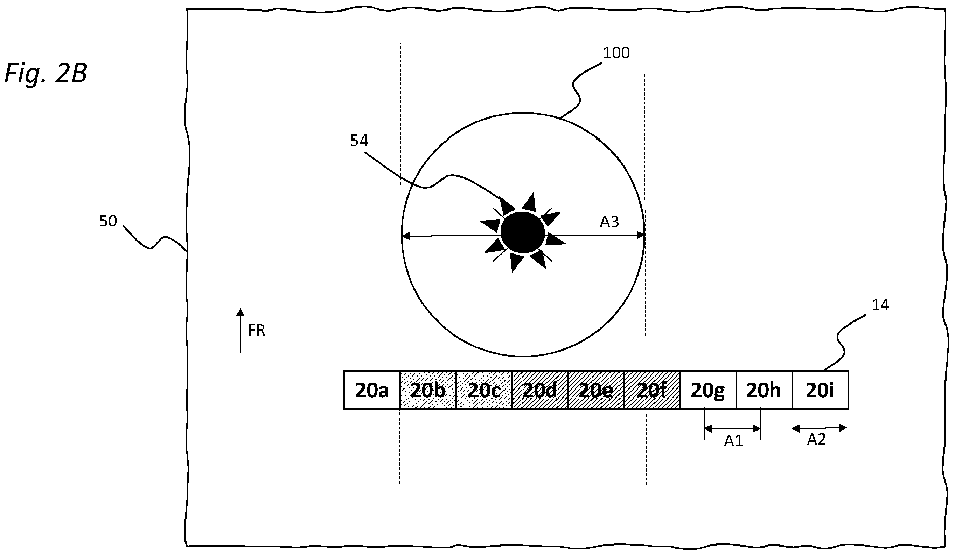

Die in den Figuren 1 und 2 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Figur 1 zeigt ein Ausführungsbeispiel einer erfindungsgemäßen landwirtschaftlichen Verteilmaschine 10 während einer Verteilung von landwirtschaftlichem Wirkmittel auf einer landwirtschaftlichen Fläche 50.

Die Verteilmaschine 10 ist als selbstfahrende Feldspritze ausgeführt (könnte auch pneumatischer Düngerstreuer sein und/oder gezogene oder angebaute Verteilmaschine sein und/oder autonomes Fahrzeug sein) und umfasst einen Vorratsbehälter zum Mitführen des jeweiligen Wirkmittel. Zur Verteilung der Wirkmittel umfasst die Verteilmaschine 10 ein, sich in großer Arbeitsbreite von bspw. 21 Meter oder mehr quer zur Fahrtrichtung FR erstreckendes, Verteilgestänge 14 an welchem zweckmäßig mehrere zueinander beabstandet angeordnete Verteilelemente (z.B. Spritzdüsen) angeordnet sind. Der Abstand der Verteilelemente kann bspw. bei Spritzdüsen 25cm oder 50 cm zueinander betragen und bei Prallelementen die bspw. bei pneumatischen Düngerstreuern eingesetzt werden bspw. 1 Meter oder 1,5 Meter betragen.

Zur Versorgung der Verteilelemente mit dem Wirkmittel sind diese zweckmäßig mit dem Vorratsbehälter 12 gekoppelt.

Das Wirkmittel wird auf einer landwirtschaftlichen Fläche 50 ausgebracht, welche als Pflanzen neben Kulturpflanzen 52 auch Schadbewuchs 54 aufweist. Die Kulturpflanzen 52 sind in einer Vielzahl von Kulturpflanzenreihen 56a - 56g, die sich durch die Aussaat ergeben, angeordnet. Ziel der erfindungsgemäßen positionsgenauen Verteilung von Wirkmittel kann bspw. eine positionsgenaue Behandlung der Kulturpflanzen 52, respektive der Kulturpflanzenreihen 56a - 56g sein und/oder eine positionsgenaue Behandlung des Schadbewuchs 54 mit einem jeweiligen Wirkmittel sein. Wobei eine Auswahl der jeweiligen Behandlung der Kulturpflanzen 52 und/oder des Schadbewuchs 54 manuell durch eine Bedienperson erfolgen kann und/oder automatisiert mittels der Steuereinrichtung anhand eines mittels der Verteilmaschine 10 mitgeführten Wirkmittel erfolgen kann.

Zur Definition von mit Wirkmittel zu behandelnden Pflanzen ist eine Bestimmungseinrichtung vorgesehen. Wobei die Bestimmungseinrichtung bspw. einen oder mehrere am Verteilgestänge 14 angeordnete Sensoren 16 (z.B. Kamerasysteme) umfasst, um somit Positionen von mit Wirkmittel zu behandelnden Pflanzen im Online-Verfahren definieren zu können. Zusätzlich oder optional kann die Bestimmungseinrichtung jedoch auch eine Drohne 18 mit entsprechender Sensorik umfassen, um somit Positionen von mit Wirkmittel zu behandelnden Pflanzen im Offline-Verfahren definieren zu können. Auch GPS-Systeme können alternativ oder ergänzend zur Definition von Positionen von mit Wirkmittel zu behandelnden Pflanzen eingesetzt werden. Auch die Verwendung von Ackerschlagkarteien wären denkbar.

Um die Verteilelemente einzeln oder gruppenweise zumindest basierend auf der jeweiligen definierten Position der Pflanzen und einer die Positionen der Pflanzen umgebenden, vorzugsweise in dessen Größe veränderbaren Zielflächengröße zu steuern kann die Verteilmaschine 10 zudem eine Steuereinrichtung aufweisen.

Die Figuren 2A & 2B zeigen je ein Ausführungsbeispiel einer definierten Position einer mit Wirkmittel zu behandelnder Pflanze (z.B. Schadbewuchs 54) auf einer landwirtschaftlichen Fläche 50, mit einer diese umgebenden, gemäß den Ausführungsbeispielen im Wesentlichen gleichmäßigen umgebenden kreisförmigen, und vorzugsweise in dessen Größe veränderbaren Zielflächengröße 100.

Neben einer im wesentlichen gleichmäßig umgebenden Zielflächengröße 100, wäre auch eine Zielflächengröße denkbar, bei der eine der Pflanze vorgelagerte und eine der Pflanze nachgelagerte, die Zielflächengröße definierende, Erstreckung eines Querschnittes in Fahrtrichtung ungleichmäßig sind und/oder bei der eine links gegenüber der Pflanze und eine rechts gegenüber der Pflanze sich befindende, die Zielflächengröße definierende, Erstreckung des Querschnittes quer zur Fahrtrichtung ungleichmäßig sind.

In den Figuren 2A & 2B ist zudem jeweils schematisch ein Abschnitt eines Verteilgestänge 14 mit daran angeordneten Verteilelementen 20a-20i dargestellt, wobei die Verteilelemente 20a-20i bspw. in einem mittleren Abstand A1 von 25cm zueinander angeordnet sind und somit bspw. jeweils eine Breite A2 von bspw. 25cm abdecken können.

Erfindungsgemäß ist jeweils vorgesehen, das basierend auf der jeweiligen Position der Pflanzen und der die Positionen der Pflanzen umgebenden, in dessen Größe veränderbaren Zielflächengröße 100, jeweils Verteilelemente 20a - 20i einzeln oder gruppenweise mittels der Steuereinrichtung steuerbar sind, d.h. aktivierbar oder deaktivierbar sind. Wobei gemäß der Figur 2A die Verteilelemente 20b und 20c aufgrund der Zielflächengröße 100 aktiviert sind und gemäß der Figur 2B die Verteilelemente 20b - 20f aufgrund der Zielflächengröße 100 aktiviert sind, was jeweils durch eine Schraffur dargestellt ist.

Erfindungsgemäß kann insbesondere vorgesehen sein, dass mittels der Steuereinrichtung eine Definition der Lage der mehreren am Verteilgestänge 14 angeordneten Verteilelemente 20a-20i quer zur Fahrtrichtung FR der Verteilmaschine 10 erfolgt und eine Lage der Positionen von mit Wirkmittel zu behandelnden Pflanzen gegenüber den mehreren am Verteilgestänge 14 angeordneten Verteilelementen 20a - 20i erfolgt, so dass jeweils die Verteilelemente 20a - 20i mittels der Steuereinrichtung einzeln oder gruppenweise gesteuert werden, um die Zielflächengröße 100 möglichst exakt mit Wirkmittel abdecken zu können, wobei dies gemäß Figur 2A bspw. die Verteilelemente 20b und 20c sind. Wobei dies zudem unter Berücksichtigung der Verteilelemente 20a - 20i erfolgt, die der zu behandelnden Pflanze am nächsten sind und mittels derer die Breite A2 der Zielflächengröße 100 möglichst exakt abgedeckt werden kann.

Um die Zielflächengröße 100 nicht nur quer zur Fahrtrichtung FR möglichst exakt mit Wirkmittel behandeln zu können, sondern auch in Fahrtrichtung FR ist es zudem möglich, dass die Steuereinrichtung dazu eingerichtet ist, Einschaltpositionen und Ausschaltpositionen der Verteilelemente 20a - 20i einzeln oder gruppenweise basierend auf der Zielflächengröße 100, einer Fahrgeschwindigkeit (und somit anhand eines Abstands in Fahrtrichtung FR) und/oder einer Systemreaktionszeit zu verändern.

Aufgrund der großen Arbeitsbreite des Verteilgestänge 14, sich verändernden Fahrgeschwindigkeiten und Bodenunebenheiten kann es vorkommen, dass bspw. das Verteilgestänge 14 in Fahrtrichtung FR beginnt sich aufzuschwingen, wodurch bspw. ein exaktes Treffen der Pflanzen bei einer kleinen Zielflächengröße 100 erschwert wird und wodurch die Größe der Zielflächengröße 100 entsprechend vergrößert werden sollte. Um auch bei derartigen Bedingungen eine positionsgenaue Verteilung von Wirkmittel zu gewährleisten ist es möglich, dass die Größe der Zielflächengröße 100, insbesondere eine Größe eines Querschnitt A3 (z.B. Radius) der Zielflächengröße 100 automatisiert, insbesondere anhand einer Rückkoppelung einer Bewegungsinformation der Verteilmaschine 10, mittels der Steuereinrichtung veränderbar ist. Somit ist es bspw. möglich, dass die Bewegungsinformationen definiert sind durch eine Fahrgeschwindigkeit der Verteilmaschine 10, wobei die Größe, insbesondere eine Größe eines Querschnitt A3, der Zielflächengröße 100 je größer ist, desto größer die Fahrgeschwindigkeit ist. Auch eine, insbesondere sensorisch erfasste, Schwingung des Verteilgestänge 14 in Fahrtrichtung FR (umfasst auch entgegengesetzt zur Fahrtrichtung) könnte als Bewegungsinformation mittels der Steuereinrichtung verarbeitet werden, wobei die Größe, insbesondere eine Größe eines Querschnitt A3, der Zielflächengröße 100 je größer ist, desto größer die Amplitude der Schwingung ist und/oder je weiter entfernt das jeweilige Verteilelement 20a - 20i von einer Mittelachse der Verteilmaschine 10 liegt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 10: Verteilmaschine
- 12: Vorratsbehälter
- 14: Verteilgestänge
- 16: Sensor
- 18: Drohne
- 20a-20i: Verteilelement

- 50: landwirtschaftliche Fläche
- 52: Kulturpflanze
- 54: Schadbewuchs
- 56a - 56g: Kulturpflanzenreihe

- 100: Zielflächengröße

- A1: mittlerer Abstand
- A2: Breite
- A3: Querschnitt

- FR: Fahrtrichtung

## Patentansprüche

1. Landwirtschaftliche Verteilmaschine (10) zum positionsgenauen Verteilen von landwirtschaftlichem Wirkmittel auf einer landwirtschaftlichen Fläche (50), mit
- mehreren beabstandet zueinander an einem Verteilgestänge (14) angeordneten, zum Verteilen des landwirtschaftlichen Wirkmittel eingerichteten Verteilelementen (20a - 20i),
- einer Bestimmungseinrichtung, welche dazu eingerichtet ist, Positionen von mit Wirkmittel zu behandelnden Pflanzen auf der landwirtschaftlichen Fläche (50) zu definieren,
- einer Steuereinrichtung, welche zur Steuerung der Verteilelemente (20a - 20i) und zur Auswertung von mittels der Bestimmungseinrichtung definierten Positionen von mit Wirkmittel zu behandelnden Pflanzen eingerichtet ist,
**dadurch gekennzeichnet, dass** die Steuereinrichtung zudem dazu eingerichtet ist, die Verteilelemente (20a - 20i) einzeln oder gruppenweise zumindest basierend auf der jeweiligen definierten Position der Pflanzen und einer die Positionen der Pflanzen umgebenden, vorzugsweise in dessen Größe veränderbaren, Zielflächengröße (100) zu steuern.

2. Verteilmaschine (10) nach Anspruch 1, **dadurch gekennzeichnet, dass** die Steuereinrichtung dazu eingerichtet ist, die Lage der mehreren am Verteilgestänge (14) angeordneten Verteilelementen (20a - 20i) quer zur Fahrtrichtung (FR) der Verteilmaschine (10) zu definieren und eine Lage der Positionen von mit Wirkmittel zu behandelnden Pflanzen gegenüber den mehreren am Verteilgestänge (14) angeordneten Verteilelementen (20a - 20i) zu definieren.

3. Verteilmaschine (10) nach Anspruch 1 oder 2, **dadurch gekennzeichnet, dass** die Steuereinrichtung dazu eingerichtet ist, die Verteilelemente (20a - 20i) der mehreren am Verteilgestänge (14) angeordneten Verteilelemente (20a - 20i) einzeln oder gruppenweise zu steuern, deren Lage am Verteilgestänge (14) quer zur Fahrtrichtung (FR) der Verteilmaschine (10) gegenüber der Position der zu behandelnden Pflanze am nächsten ist und mittels derer der Querschnitt (A3) der Zielflächengröße (100) möglichst exakt abgedeckt werden kann.

4. Verteilmaschine (10) nach einem der vorherigen Ansprüche, **dadurch gekennzeichnet, dass** die Zielflächengröße (100) eine Position der Pflanze
- im Wesentlichen gleichmäßig umgibt und/oder
- eine der Pflanze vorgelagerte und eine der Pflanze nachgelagerte, die Zielflächengröße (100) definierende, Erstreckung eines Querschnittes (A3) in Fahrtrichtung (FR) ungleichmäßig sind und/oder
- eine links gegenüber der Pflanze und eine rechts gegenüber der Pflanze sich befindende, die Zielflächengröße (100) definierende, Erstreckung des Querschnittes (A3) quer zur Fahrtrichtung (FR) ungleichmäßig sind.

5. Verteilmaschine (10) nach einem der vorherigen Ansprüche, **dadurch gekennzeichnet, dass** die Steuereinrichtung dazu eingerichtet ist, die Verteilelemente (20a - 20i) einzeln oder gruppenweise basierend auf dem Querschnitt (A3) der Zielflächengröße (100) quer zur Fahrtrichtung (FR), einem Höhenabstand der Verteilelemente (20a - 20i) gegenüber den zu behandelnden Pflanzen und/oder basierend auf einer mittels der Verteilelemente (20a - 20i) erreichbaren Breite (A2) an landwirtschaftlichem Wirkmittel quer zur Fahrtrichtung (FR) der Verteilmaschine (10) zu steuern.

6. Verteilmaschine (10) nach einem der vorherigen Ansprüche, **dadurch gekennzeichnet, dass** die Steuereinrichtung dazu eingerichtet ist, eine ausgebrachte Menge an Wirkmittel der Verteilelemente (20a - 20i) einzeln oder gruppenweise basierend auf der jeweiligen mittels der von einzelnen oder gruppenweisen Verteilelemente (20a - 20i) abgedeckten Breite (A2) der Zielflächengröße (100) zu erhöhen oder zu verringern.

7. Verteilmaschine (10) nach einem der vorherigen Ansprüche, **dadurch gekennzeichnet, dass** die Steuereinrichtung dazu eingerichtet ist, Einschaltpositionen und Ausschaltpositionen der Verteilelemente (20a - 20i) einzeln oder gruppenweise basierend auf der Zielflächengröße (100), einer Fahrgeschwindigkeit und/oder einer Systemreaktionszeit zu verändern.

8. Verteilmaschine (10) nach einem der vorherigen Ansprüche, **dadurch gekennzeichnet, dass** die Steuereinrichtung dazu eingerichtet ist, die Verteilelemente (20a - 20i) einzeln oder gruppenweise basierend auf einem definierbaren Überlappungsgrad und/oder einer definierbaren Überlappungstoleranz zu steuern.

9. Verteilmaschine (10) nach einem der vorherigen Ansprüche, **dadurch gekennzeichnet, dass** die Größe, insbesondere eine Größe des Querschnittes (A3), der Zielflächengröße (100)
- manuell veränderbar ist und/oder
- automatisiert, insbesondere anhand einer Rückkoppelung einer Bewegungsinformation der Verteilmaschine (10), mittels der Steuereinrichtung veränderbar ist und/oder
- automatisiert, insbesondere anhand einer Vegetationsphase von mit Wirkmittel zu behandelnden Pflanzen auf der landwirtschaftlichen Fläche (50), mittels der Steuereinrichtung veränderbar ist.

10. Verteilmaschine (10) nach Anspruch 9, dass die Bewegungsinformationen definiert sind
- durch eine Fahrgeschwindigkeit der Verteilmaschine (10), wobei die Größe, insbesondere eine Größe eines Querschnittes (A3), der Zielflächengröße (100) je größer ist, desto größer die Fahrgeschwindigkeit ist und/oder
- durch, insbesondere sensorisch erfasste, Schwingungen des Verteilgestänge (14) in Fahrtrichtung (FR), wobei die Größe, insbesondere eine Größe des Querschnittes (A3), der Zielflächengröße (100) je größer ist, desto größer die Amplitude der Schwingung ist und/oder je weiter entfernt das jeweilige Verteilelement von einer Mittelachse der Verteilmaschine (10) liegt.

11. Verteilmaschine (10) nach Anspruch 9 oder 10, **dadurch gekennzeichnet, dass** die Steuereinrichtung dazu eingerichtet ist, in Abhängigkeit der Fahrgeschwindigkeit und/oder in Abhängigkeit der Schwingungen eine Mindestgröße der Zielflächengröße (100) zu definieren, insbesondere unter Berücksichtigung eines veränderbaren Toleranzbereichs der Zielflächengröße (100) zu definieren.

12. Verteilmaschine (10) nach einem der vorherigen Ansprüche, **dadurch gekennzeichnet, dass** die Bestimmungseinrichtung dazu eingerichtet ist, Positionen von mit Wirkmittel zu behandelnden Pflanzen in einem Offline-Verfahren zu definieren und/oder in einem Online-Verfahren zu definieren.

13. Verteilmaschine (10) nach einem der vorherigen Ansprüche, **dadurch gekennzeichnet, dass** eine Definition von Positionen von zu behandelnden Pflanzen mittels der Bestimmungseinrichtung eine jeweilige Definition einer Punktkoordinate auf einer landwirtschaftlichen Fläche umfasst, wobei die Zielflächengröße diese Punktkoordinate, umgibt.

14. Verteilmaschine (10) nach einem der vorherigen Ansprüche, **dadurch gekennzeichnet, dass**
- diese eine Feldspritze ist und zur Verteilung von flüssigem Wirkmittel eingerichtet ist und die Verteilelemente (20a - 20i) jeweils als Spritzdüsen ausgeführt sind und/oder
- dass diese ein pneumatischer Düngerstreuer ist und zur Verteilung von granularem Wirkmittel eingerichtet ist und die Verteilelemente (20a - 20i) als Prallelemente oder Leitelemente ausgeführt sind.

15. Verfahren zum positionsgenauen Verteilen von landwirtschaftlichem Wirkmittel auf einer landwirtschaftlichen Fläche (50), mit den Schritten
- Bereitstellen einer landwirtschaftlichen Verteilmaschine (10) mit einem Verteilgestänge (14) und mehreren beabstandet zueinander am Verteilgestänge (14) angeordneten Verteilelementen (20a - 20i), welche zum Verteilen von Wirkmittel eingerichtet sind,
- Definition von Positionen von mit Wirkmittel zu behandelnden Pflanzen auf der landwirtschaftlichen Fläche (50), vorzugsweise mittels einer Bestimmungseinrichtung,
- Auswertung von definierten Positionen von mit Wirkmittel zu behandelnden Pflanzen mittels einer Steuereinrichtung,
**gekennzeichnet durch** den Schritt
- Steuern einzelner oder gruppenweiser Verteilelemente (20a - 20i) basierend auf der jeweiligen definierten Position der Pflanzen und einer die Position der Pflanzen umgebenden, vorzugsweise in dessen Größe veränderbaren Zielflächengröße (100) mittels der Steuereinrichtung.

16. Verfahren nach Anspruch 15, **dadurch gekennzeichnet, dass** dieses ausgeführt wird mit einer landwirtschaftlichen Verteilmaschine (10) nach einem der Ansprüche 1 bis 14.
